Europäisches Patentamt

(19) European Patent Office

Office européen des brevets

(11) EP 0 787 926 A2

(12) **EUROPEAN PATENT APPLICATION**

(43) Date of publication:
06.08.1997 Bulletin 1997/32

(51) Int. Cl.$^6$: **F16H 1/28**

(21) Application number: **97101813.0**

(22) Date of filing: **05.02.1997**

(84) Designated Contracting States:
**DE GB**

(30) Priority: **05.02.1996 JP 40308/96**

(71) Applicant: **AISIN AW CO., LTD.**
**Anjo-shi Aichi-ken (JP)**

(72) Inventors:
• **Tsukamoto, Kazumasa**
  **Anjo-shi, Aichi-ken (JP)**
• **Hayabuchi, Masahiro**
  **Anjo-shi, Aichi-ken (JP)**
• **Nishida, Masaaki**
  **Anjo-shi, Aichi-ken (JP)**
• **Kasuya, Satoru**
  **Anjo-shi, Aichi-ken (JP)**

(74) Representative: **VOSSIUS & PARTNER**
  **Siebertstrasse 4**
  **81675 München (DE)**

(54) **Power transmission system with helical planetary gears**

(57)    A power transmission system comprises planetary gears including: first and second integrated pinion gears made of helical gears of different diameters; a carrier bearing the first and second pinion gears rotatably; a ring gear made of a helical gear meshing with the first pinion gear; and a sun gear made of a helical gear meshing with the second pinion gear. The power is transmitted, by using one of the carrier, the ring gear and the sun gear as a reaction element, between the remaining two elements through the first and second pinion gears. The relation between the angles of torsion of the tooth traces of the first and second pinion gears is so set on the basis of the ratio between the diameters of the two helical gears that the first and second pinion gears may not exert a thrust force upon another member.

*FIG. 1*

EP 0 787 926 A2

## Description

The present invention relates to a power transmission system and, more particularly, to a power transmission system which is composed of a plurality of planetary gear sets for transmitting a power through the pinion gears belonging to the planetary gear set and having different diameters.

Some power transmission system, as composed in combination of a plurality of planetary gear sets, is equipped with a gear train which is constructed to include integrated larger-diameter and smaller-diameter pinion gears (as will be called the "stepped pinion" having the integrated larger- and smaller-diameter pinion gears) so that the power is transmitted, by using one of a carrier bearing the stepped pinion, a ring gear meshing with one pinion gear of the stepped pinion and a sun gear meshing with the other pinion gear as a reaction element, between the remaining two elements through the stepped pinion. The power transmission system thus constructed is exemplified by the technique which is disclosed in Japanese Patent Laid-Open No. 119802/1995. In order to smoothen the power transmission at the meshing portions, this power transmission system is usually devised to cancel the moment, which might otherwise be established in the stepped pinion to incline the pinion shaft, with a thrust force by designing the direction of the angle of torsion which is set in the tooth trace of each gear.

Incidentally, in the case of either a simple planetary gear set, in which one planetary gear is made to mesh with a sun gear and a ring gear, or an ordinary planetary gear set such as a double pinion planetary gear set in which a pair of planetary gears are made to mesh each other and in which the planetary gear of one of the gear sets is made to mesh with the sun gear whereas the other is made to mesh with the ring gear, the thrust forces, as established in the pinion gear by the torsion angles set for the tooth traces, act in the opposite directions at the ring gear side and at the sun gear side so that the torsion angles are equalized at the ring gear side and at the sun gear side. As a result, the thrust forces in the opposite directions, as acting on the pinion gear, are equalized and canceled to exert no action upon another member.

In the case of the stepped pinion of the larger-and smaller-diameter pinion gears, as in the prior art, the thrust force acting upon the stepped pinion become unbalance to act on another member due to the difference between the diameters of the pinion gars meshing with the sun gear and the ring gear even if the torsion angles of the two are equal. In the prior art, therefore, there is arranged between the stepped pinion and the carrier bearing it a thrust roller bearing having a sufficient axial supporting force so that the thrust force is supported by the carrier. However, the construction having the thrust roller bearing increases the axial size of the system to enlarge the size.

It is, therefore, a first object of the present invention to provide such a compact construction of a power transmission system for transmitting a power through a stepped pinion as requires no support of the thrust force of the stepped pinion.

A second object of the present invention is to make compact a power transmission system, which is composed of a transmission mechanism for achieving five forward speeds by setting the torsion angles, as described above.

In order to achieve the above-specified first object, according to the present invention, there is provided a power transmission system comprising planetary gears including: first and second integrated pinion gears made of helical gears of different diameters; a carrier bearing the first and second pinion gears rotatably; a ring gear made of a helical gear meshing with the first pinion gear; and a sun gear made of a helical gear meshing with the second pinion gear, the power is transmitted, by using one of the carrier, the ring gear and the sun gear as a reaction element, between the remaining two elements through the first and second pinion gears, wherein the relation between the angles of torsion of the tooth traces of the first and second pinion gears is so set on the basis of the ratio between the diameters of the two helical gears that the first and second pinion gears may not exert a thrust force upon another member.

In order to achieve the above-specified second object, moreover, the planetary gear sets include: a first ring gear; a first carrier for rotatably bearing the first pinion gear meshing with the ring gear; a first sun gear meshing with the first pinion gear; a second ring gear connected to the first carrier; a second carrier connected to the first ring gear for rotatably bearing a third pinion gear meshing with the second ring gear; a third sun gear meshing with the third pinion gear; and a second sun gear meshing with the second pinion gear having a smaller diameter than that of the first pinion gear; the first ring gear and the second carrier are connected to an output shaft; the first sun gear is connected to an input shaft by a first clutch and retained on a case by a first brake; the third sun gear is retained on the case by a second brake; the first carrier and the ring gear are retained on the case by a third brake and connected to the input shaft by the second clutch; and the second sun gear is retained on the case by a fourth brake.

In the present invention thus constructed, the relation between the torsion angles of the two pinion gears is so set the integrated first and second pinion gears, i.e., the stepped pinion may not exert the thrust force upon another member. As a result, the system can be made compact without requiring any thrust bearing.

According to the construction as defined in claim 2, moreover, at the highest gear stage, there arises a state in which the power is transmitted from the first carrier to the first ring gear through the stepped pinion. In this state, the relative rotation between the stepped pinion and the carrier increases. If the relation between the torsion angles of the larger-diameter pinion gear and the smaller-diameter pinion gear is not proper, the stepped pinion exerts the thrust force upon another member so that a thrust bearing of a relatively high capacity is necessary. According to the construction as defined in claim 2, the relation between the torsion angles of the larger-diameter pinion gear and the smaller-diameter pinion gear is so set that the stepped pinion may not exert the thrust force upon another member. As a result, the power transmission system for achieving the five forward speeds can be made compact without requiring any thrust bearing.

Fig. 1 is a schematic diagram illustrating the relation between the angles of torsion of tooth traces of a power transmission system according to one mode of embodiment of the present invention;
Fig. 2 is a skeleton diagram showing the entire construction of a vehicular automatic transmission or the power transmission system according to the present invention;
Fig. 3 is an operation diagram of the transmission; and
Fig. 4 is a partial section showing the detail of that portion of the transmission, to which is applied the present invention.

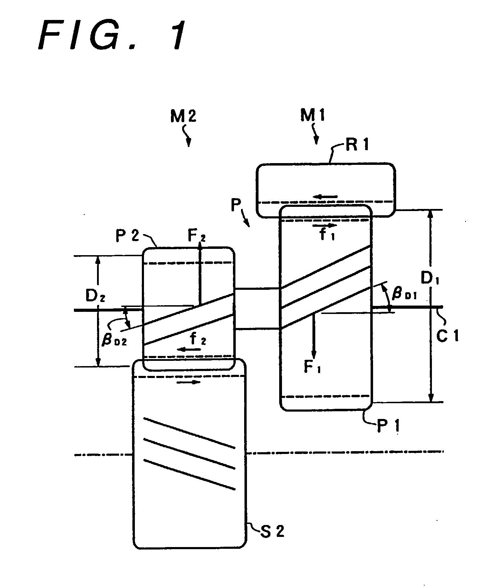

A mode of embodiment of the present invention will be described with reference to the accompanying drawings. Fig. 1 schematically shows that portion of a power transmission system constructed of a plurality of planetary gear sets M, to which is applied the present invention. This power transmission system is constructed of planetary gear sets M1 and M2, which are composed of: first and second pinion gears P1 and P2 made of helical gears of different diameters and integrated with each other; a carrier C1 bearing the first and second pinion gears P1 and P2 rotatably; a ring gear R1 made of a helical gear meshing with the pinion gear P1; and a sun gear S2 made of a helical gear meshing with the second pinion gear P2. In these planetary gear sets, the power is transmitted, by using one (i.e., the sun gear S2 in the present embodiment) of the carrier C1, the ring gear R1 and the sun gear S2a sun gear made of a helical gear meshing with said second pinion gear as a reaction element, between the remaining two elements (i.e., the carrier C1 and the ring gear R1 in the present embodiment) through the first and second pinion gears P1 and P2.

The relations between the angles of torsion $\beta_{D1}$ and $\beta_{D2}$ on the reference pitch circles of the tooth traces of the first and second pinion gears P1 and P2 are so set on the basis of the ratio between the diameters (or the pitch circle diameters) $D_1$ and $D_2$ of the two helical gears that the first and second pinion gears P1 and P2, i.e, a stepped pinion P may not exert a thrust force upon another member.

The setting of the aforementioned angles of torsion is executed in the following manner. It is assumed in the following calculation that both the thrust force and the tangential force of the torque be exerted upon the meshing pitch circles. With reference to the torsion angle $\beta_{D1}$ on the reference pitch circle of the first pinion gear P1, there is determined such a torsion angle $\beta_{D2}$ on the reference pitch angle of the second pinion gear P2 as will cancel the thrust force to be produced in the stepped pinion P.

$D_1$, $D_2$:     Reference pitch circle diameters of the pinion gears P1 and P2;
$d_1$, $d_2$:     Meshing pitch circle diameters of the pinion gears P1 and P2;
$\beta_{d1}$, $\beta_{d2}$:     Torsion angles on the meshing pitch circles of the pinion gears P1 and P2
$m_1$, $m_2$:     Normal modules of the pinion gears P1 and P2;
$Z_{P1}$, $Z_{P2}$:     Tooth numbers of the pinion gears P1 and P2;
$F_1$, $F_2$:     Tangential forces on the meshing pitch circles of the pinion gears P1 and P2;

and

$f_1$, $f_2$:     Thrust forces on the meshing pitch circles of the pinions P1 and P2.

Then, the following formula is obtained from the balance of the thrust forces, i.e., $f_2 = f_1$ :

$$F_2 \cdot \tan\beta_{d2} = F_1 \cdot \tan\beta_{d1} \tag{1}$$

From the balance of the moments on the pinion axis, the following formula is obtained:

$$F_2 \cdot d_2 = F_1 \cdot d_1 \tag{2}$$

From (1) and (2), the following formula holds:

$$d_1 \cdot \tan\beta_{d2} = d_2 \cdot \tan\beta_{d1} \tag{3}$$

Since a lead L ($L = \pi \cdot D/\tan\beta$) is constant, moreover, the relation between the torsion angle on the reference pitch and the torsion angle on the meshing pitch circle is expressed by the following formula:

$$\pi \cdot D / \tan\beta_D = \pi \cdot d / \tan\beta_d,$$

that is,

$$\tan\beta_d = (d/D) \cdot \tan\beta_D.$$

Hence,

$$\tan\beta_{d2} = (d_2/D_2) \cdot \tan\beta_{D2} \tag{4a};$$

and

$$\tan\beta_{d1} = (d_1/D_1) \cdot \tan\beta_{D1} \tag{4b}.$$

If these formulas (4a) and (4b) are substituted into the formula (3) and adjusted, the following formula is obtained:

$$D_1 \cdot \tan\beta_{d2} = D_2 \cdot \tan\beta_{D1} \tag{5},$$

that is,

$$(Z_{P1} \cdot m_1 / \cos\beta_{D1}) \cdot \tan\beta_{D2} = (Z_{P2} \cdot m_2 / \cos\beta_{D2}) \cdot \tan\beta_{D1},$$

that is,

$$Z_{P1} \cdot m_1 \cdot \sin\beta_{D2} = Z_{P2} \cdot m_2 \cdot \sin\beta_{D1},$$

hence,

$$\beta_{D2} = \sin^{-1}\{(Z_{P2} \cdot m_2 / Z_{P1} \cdot m_1) \cdot \sin\beta_{D1}\}.$$

By thus setting the torsion angle $\beta_{D2}$ of the second pinion gear P2, as described above, the relation between the torsion angle $\beta_{D1}$ of the tooth trace of the lager-diameter pinion P1 and the torsion angle $\beta_{D2}$ of the tooth trace of the smaller-diameter pinion P2 is so set that the stepped pinion P itself may not exert the thrust force upon another member. As a matter of fact, the gear meshing engagements simultaneously occur for the plurality of gears. For the meshing engagements of the teeth having the set torsion angles, moreover, the meshing positions of the individual teeth move from the top to the root, as viewed in the axial direction, and vice versa as the meshing engagements proceed. Hence, the strict calculations would be very complicated. However, simple calculations can give sufficiently practical values even if it is assumed, as in the aforementioned example of calculations, that the thrust force acts upon the meshing pitch circle.

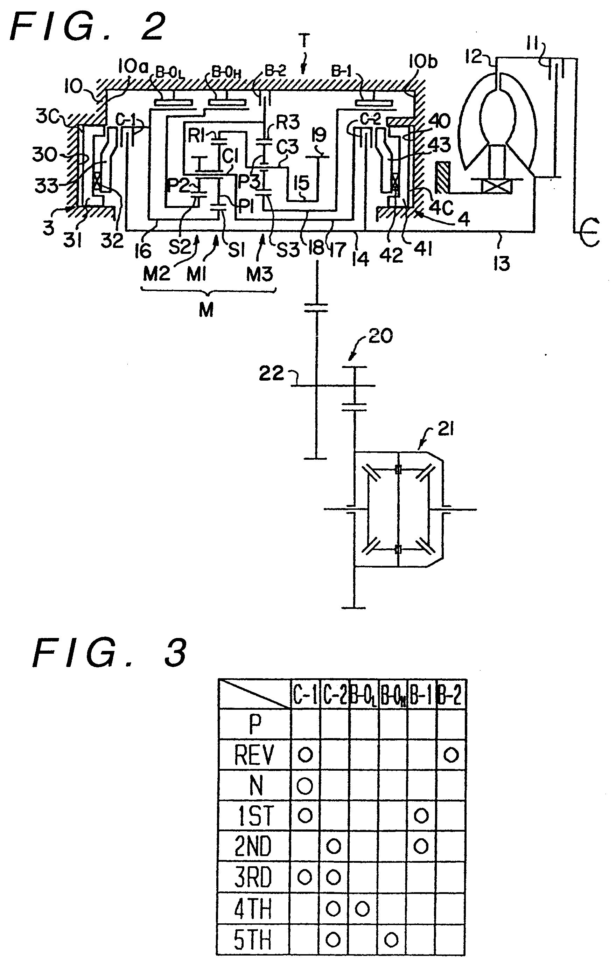

Here will be described a more specific construction of the power transmission system into which is incorporated such stepped pinion P. As shown in the skeleton in Fig. 2, this power transmission system is constructed into an automatic transmission for a vehicle. A transmission T is constructed of: a torque converter 12 having a lockup clutch 11; three stages of planetary gear sets M1, M2 and M3; and four brakes (B-0$_L$, B-0$_H$, B-1 and B-2) and two clutches (C-1 and C-2) arranged in association with them. The planetary gear set M1 is equipped with a first sun gear S1, a second ring gear R1, a first pinion gear P1 meshing with them, and a first carrier C1 bearing them rotatably. The planetary gear set M2 is equipped with a second sun gear S2, and a second pinion gear P2 meshing with the second sun gear S2 and having a smaller diameter than that of the pinion gear P1 which meshes with the second sun gear S2, and the pinion gear P2 is rotatably borne by the carrier C1 and is integrated with the pinion gear P1. The third planetary gear set M3 is equipped with a third sun gear S3, a second ring gear R3, and a second carrier rotatably bearing a third pinion gear P3 meshing with them. The individual ring gears R1 and R3 and carriers C3 and C1 of the two gear sets M1 and M3 are connected to each other. The sun gear S1 and the carrier C1 of the gear set M1 are so respectively connected through the first and second clutches (C-1 and C-2) to an input shaft 14 leading to a turbine shaft 13 of the torque converter 12 that they may act as the input elements. The ring gear R1 and the carrier C3, as connected to each other, are connected through an output shaft 15 to a counter drive gear 19 acting as the output element.

Moreover, the sun gear S1 of the gear set M1 can be fixed on a transmission case 10 by the first brake (B-0$_L$), and the sun gear S3 of the gear set M3 can also be fixed on the transmission case 10 by the second brake (B-1). The ring gear R3, as connected to the carrier C1, can be fixed on the transmission case 10 by the third brake (B-2). In the present embodiment, more specifically, the sun gear S1 is connected to the clutch (C-1) through a sun gear shaft 16 fitted on the outer circumference of the input shaft 14. The carrier C1 is connected to the clutch (C-2) through a carrier shaft 17 fitted on the outer circumference of the input shaft 14. The sun gear S3 is connected to the brake (B-1) through a sun gear shaft 18 fitted on the outer circumference of the carrier shaft 17. Moreover, the individual brakes other than the brake (B-2) are made of band brakes whereas the brake (B-2) is made of wet type multiple discs, although not limited thereto. In this embodiment, the counter drive gear 19 is connected to a differential unit 21 through a counter gear 20 fixed on a counter shaft 20, to construct a transmission having a transverse construction.

In this transmission T, the first and second clutches (C-1 and C-2) are arranged across the transmission mechanism M, and their first and second hydraulic servos 3 and 4 are confined in the side walls 10a and 10b, respectively, at the two axial end portions of the transmission case 10. These first and second hydraulic servos 3 and 4 are made of stationary type first and second cylinders 30 and 40, respectively, which are formed to confront each other in the respective side walls 10a and 10b of the transmission case 10. The first and second hydraulic servos 3 and 4 are equipped with: first and second pistons 31 and 41 which are slidably arranged in those cylinders 30 and 40 and associated with the first and second cylinders 30 and 40, respectively, to define oil chambers 3C and 4C to be fed with the oil pressure; and first and second bearings 32 and 42 arranged between the pistons 31 and 41 and the first and second clutches (C-1 and C-2), respectively, to allow the relative rotations between the first and second pistons 31 and 41 and the first and second clutches (C-1 and C-2) and to transmit the pushing forces of the first and second pistons 31 and 41 in accordance with the feeds of the oil pressure, respectively, to the first and second clutches (C-1 and C-2). The first and second hydraulic servos 3 and 4 are equipped with push members 33 and 43, respectively, between the first and second bearings 32 and 42 and the first and second clutches (C-1 and C- 2). The push members 33 and 43 confront the bearings 32 and 42 at the inner circumferential sides and the clutches (C-1 and C-2) at the outer circumferential sides.

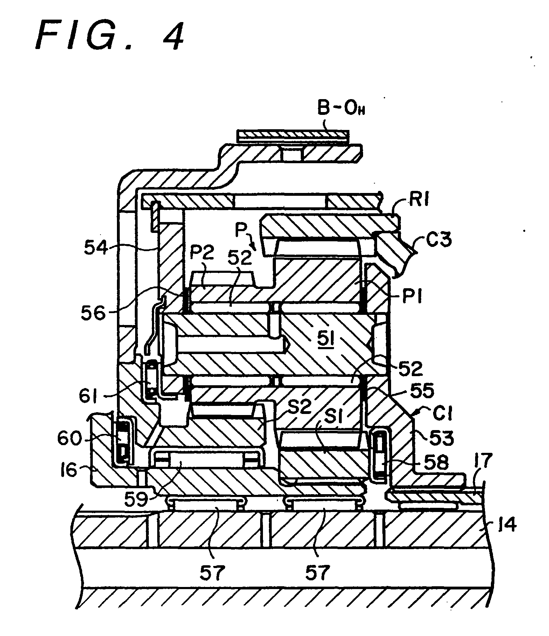

Fig. 4 shows a section of the portion, to which is applied the present invention, in detail. The stepped pinion P is rotatably borne in the radial direction on a pinion shaft 51 through a bearing bush 52 and is axially positioned between carrier flanges 53 and 54 supporting the pinion shaft 51 across washers 55 and 56. On the other hand, the sun gear S1 is splined to the stepped portion of the sun gear shaft 16 and is supported in the radial direction on the input shaft 14 through a roller bearing 57 supporting the sun gear shaft 16 and in the thrust direction on the end face of the stepped portion and a thrust bearing 58. Moreover, the second sun gear S2 is supported in the radial direction on the sun gear shaft 16 by a roller bearing 59 and in the thrust direction on the flange portion of the sun gear shaft and the carrier flange 54 through thrust bearings 60 and 61. The description of the remaining portions will be omitted by designating the corresponding members by reference numerals similar to those of Fig. 2.

The transmission thus constructed achieves the individual gear stages by feeding the oil pressure to the hydraulic servos corresponding to the individual clutches and brakes under the control of the not-shown hydraulic control unit thereby to apply (as indicated by symbols ○)) and release (as indicated by no symbol) the individual clutches and brakes, as operationally tabulated in Fig. 3. Specifically, the first speed (1ST) is achieved when the clutch (C-1) and the brake (B-1) are applied. At this time, the rotation of the input shaft 14 is transmitted through the clutch (C-1) to the sun gear S1 until it is outputted as the rotation of the carrier C2, which is the most decelerated with the sun gear S3 being fixed by the application of the brake (B-1), to the counter drive gear 19. On the other hand, the second speed (2ND) is achieved by applying the clutch (C-2) and the brake (B-1). At this time, the input, as transmitted through the clutch (C-2) to the carrier shaft 17, enters, as it is, to the ring gear R3 through the carrier C1 until it is outputted as the differential rotation of the carrier C3, by which the sun gear S3 fixed by the application of the brake (B-1) is used as the reaction element, to the counter drive gear 19. The third speed (3RD) is achieved by directly connecting the first planetary gear set M1 by the applications of the two clutches (C-1 and C-2). At this time, the rotation of the input shaft 14 is outputted, as it is, as the rotation of the carrier C3 to the counter drive gear 19.

The fourth speed (4TH) by the overdrive is achieved by applying the clutch (C-2) and the brake (B-O$_L$) for fixing the sun gar S1. At this time, the rotation of the input shaft 14 is transmitted, as the rotation of the ring gear R1 the speed of which is increased by the autorotation of the pinion gear P1 from the rotation of the carrier C1, from the carrier C3 to the counter drive gear 19. On the other hand, the 5th speed is achieved by applying the clutch (C-2) and the brake (B-O$_H$). At this time, the rotation of the input shaft 14 is transmitted, as the rotation of the ring gear R1 the speed of which is further increased by the autorotation of the smaller-diameter pinion gear P2 taking the reaction from the larger-diameter sun gear S2 from that of the fourth speed, from the carrier C3 to the counter drive gear 19.

Incidentally, the reverse (REV) is achieved by applying the clutch (C-1) and the brake (B-2). At this time, the rotation of the ring gear R1, as reversed and decelerated from the input of the sun gear S1 by fixing the carrier C1, is outputted through the carrier C3 to the counter drive gear 19.

For each of these shifts, in the first and second planetary gear set portions shown in Fig. 4, at the first speed (1ST), the torque of the input shaft 14 enters the smaller-diameter sun gear S1, as splined to the sun gear shaft 16, and is transmitted through the larger-diameter pinion gear P1 to the ring gear R1 and the carrier C3 so that the power transmission is executed by the first planetary gear set M1. In the case of the power transmission in this single planetary gear set, the torsion angle of the tooth trace of the pinion gear P1 and the diameter of the helical gear are naturally equalized at the meshing side with the sun gear S1 and the meshing side with the ring gear R1. At this time, therefore, the thrust forces to be applied to the pinion gear P1 have inverse directions and equal magnitudes at the meshing side with the sun gear S1 and the meshing side with the ring gear R1 so that no axial unbalance force acts upon the pinion gear P1, i.e., the stepped pinion P.

Next, at the second speed (2ND), the power is transmitted through the carrier C1 only to the ring gear R3 of the third planetary gear set M3, as described before, so that the stepped pinion P does not participate in the power transmission. At the third speed (3RD), on the other hand, the first planetary gear set M1 takes the direct connection, as described before, so that the power transmission is neither performed by the autorotation of the stepped pinion P.

At the fourth speed (4TH), moreover, there is performed the power transmission of the torque output of the ring gear R1, the speed of which is increased by the autorotation of the pinion gear P1 by the reaction of the fixed sun gear S1 from the torque input coming from the carrier C1. In this power transmission, the power is transmitted, as at the first speed (1ST), only by the first planetary gear set M1 so that no axial unbalance force does not act, for the same reason as the aforementioned one, upon the pinion gear P1, i.e., the stepped pinion P.

At the 5th speed (5TH) or the highest gear stage of this transmission, on the other hand, there is performed the power transmission of the rotation of the ring gear R1, the speed of which is further increased from that of the fourth speed by the autorotation of the smaller-diameter pinion gear P2 taking the reaction on the larger-diameter sun gear S2. At this time, the power is transmitted across the first and second pinion gears P1 and P2, and the relative rotation between the stepped pinion P and the carrier C1 is increased. By applying the aforementioned construction of the present invention, however, the thrust force to be applied to the stepped pinion P is offset to exert no action on another member. As shown, therefore, the stepped pinion P can be held in the predetermined axial position by the simple construction in which the flat washers 55 and 56 are sandwiched between the carrier C1 and the end face of the stepped pinion P.

Thus, according to the aforementioned embodiment, at the highest gear stage, there arises the state in which the power is transmitted from the carrier C1 to the first pinion gear R1 through the stepped pinion P. At this time, moreover, the relative rotation between the stepped pinion P and the carrier C1 increases. As a result, a thrust bearing of relatively high capacity is required, because the stepped pinion P exerts the thrust force upon the carrier C1 unless the relation between the torsion angles $\beta_{D1}$ and $\beta_{D2}$ of the larger-diameter pinion gear P1 and the smaller-diameter pinion gear P2 is proper. According to this construction, however, the relation between the torsion angles $\beta_{D1}$ and $\beta_{D2}$ of the larger-diameter pinion gear P1 and the smaller-diameter pinion gear P2 is so set that the stepped pinion P may not exert the thrust force upon another member. This setting makes it possible to provide a compact power transmission system which can achieve the five forward speeds without requiring any thrust bearing.

Although the present invention has been described in connection with its embodiment, it should not be limited to the specific construction which has been exemplified in the embodiment, but a variety of specific constructions can be applied to a wide variety of planetary gear sets. For example, the torsion direction of the helical gears can be inverted from that of the embodiment to cancel the separate force, which has troubled the prior art, while balancing the thrust force acting upon the stepped pinion.

## Claims

1.  A power transmission system comprising planetary gears including:

    first and second integrated pinion gears made of helical gears of different diameters;
    a carrier bearing said first and second pinion gears rotatably;
    a ring gear made of a helical gear meshing with said first pinion gear; and
    a sun gear made of a helical gear meshing with said second pinion gear,
    the power is transmitted, by using one of the carrier, the ring gear and the sun gear as a reaction element, between the remaining two elements through the first and second pinion gears,
    wherein the relation between the angles of torsion of the tooth traces of said first and second pinion gears is so set on the basis of the ratio between the diameters of the two helical gears that said first and second pinion gears may not exert a thrust force upon another member.

2.  A power transmission system accoding to claim 1,
    wherein said planetary gear sets include: a first ring gear;
    a first carrier for rotatably bearing said first pinion gear meshing with said ring gear; a first sun gear meshing with said first pinion gear; a second ring gear connected to said first carrier; a second carrier connected to said first ring gear for rotatably bearing a third pinion gear meshing with said second ring gear; a third sun gear meshing with said third pinion gear; and a second sun gear meshing with said second pinion gear having a smaller diameter than that of said first pinion gear;
    wherein said first ring gear and said second carrier are connected to an output shaft;
    wherein said first sun gear is connected to an input shaft by a first clutch and retained on a case by a first brake;

wherein said third sun gear is retained on said case by a second brake;

wherein said first carrier and said ring gear are retained on said case by a third brake and connected to said input shaft by said second clutch; and

wherein said second sun gear is retained on said case by a fourth brake.

# FIG. 1

# FIG. 2

# FIG. 3

| | C-1 | C-2 | B-0$_L$ | B-0$_H$ | B-1 | B-2 |
|------|-----|-----|------|------|-----|-----|
| P | | | | | | |
| REV | ○ | | | | | ○ |
| N | ○ | | | | | |
| 1ST | ○ | | | | ○ | |
| 2ND | | ○ | | | ○ | |
| 3RD | ○ | ○ | | | | |
| 4TH | | ○ | ○ | | | |
| 5TH | | ○ | | ○ | | |

# FIG. 4